Europäisches Patentamt

European Patent Office

Office européen des brevets

(11) Publication number: **0 269 425**
**A1**

(12) **EUROPEAN PATENT APPLICATION**

(21) Application number: **87310383.2**

(22) Date of filing: **25.11.87**

(51) Int. Cl.⁴: **B 65 G 1/02**
A 47 B 57/52

(30) Priority: **26.11.86 GB 8628280**

(43) Date of publication of application:
**01.06.88 Bulletin 88/22**

(84) Designated Contracting States:
**AT BE CH DE ES FR GR IT LI LU NL SE**

(71) Applicant: **Constantine, Philip David**
**Lydgate Lane**
**Sheffield South Yorkshire S10 5FH (GB)**

(72) Inventor: **Constantine, Philip David**
**Lydgate Lane**
**Sheffield South Yorkshire S10 5FH (GB)**

(74) Representative: **Orr, William McLean et al**
**URQUHART-DYKES & LORD 5th Floor, Tower House**
**Merrion Way**
**Leeds West Yorkshire, LS2 8PA (GB)**

(54) **Cantilever racking system.**

(57) There is disclosed a cantilever type racking system which comprises upright supports (11), generally horizontal beams (12) interconnecting the upright supports, and generally horizontal cantilever arms (18) each adjustably mounted at a selected one of a plurality of mounting positions (17) provided on each support, with each arm extending outwardly of its mounting so as to form, or to carry storage racking thereon. Each cantilever arm (18) has a mounting shoe (19) mounted rigidly on an inner end (20) of the arm, and a pivot member (21) is taken through aligned holes (22) in the shoe (19) and mounting holes (17) in the support (11) so as to bear shear loads transmitted from the arm (18) to the support (11). To resist bending movements generated by applied loads on the arm (18), a first bearing surface (23) is provided on the support (11) below the mounting holes (17) and engages a second bearing surface (24) provided on the shoe (19) below the pivot member (21).

FIG. 1

EP 0 269 425 A1

Bundesdruckerei Berlin

**Description**

CANTILEVER RACKING SYSTEM

This invention relates to a cantilever racking system comprising upright supports, generally horizontal beams interconnecting the upright supports, and generally horizontal cantilever arms mounted on the upright supports and extending outwardly therefrom so as to form, or to carry storage racking thereon.

Cantilever type racking systems are well known, and are of advantage in facilitating loading and unloading of goods, in that there is direct mounting of each arm on the respective support without the necessity for additional strengthening struts, brackets, gusset plates or the like to be provided in order to maintain the arm at the required inclination (usually approximately at right angles) to the support, whereby unobstructed access is provided for goods to be moved to and from storage racks arranged on or formed by the arms.

Necessarily, the mountings of the cantilever arms on the supports must be of robust construction, in order to bear both shear loads, and also very substantial bending moments applied by the arms to the supports when a load of goods is borne by the arms.

In view of the requirement for strength and robustness in the mountings of the cantilever arms, many existing designs either rely upon complicated and expensive profiles of supports and cantilever arms plus associated interlocking components, and/or require substantial labour content in on-site assembly using heavy duty bolt-type fastening assemblies. Therefore, with the strength requirements uppermost in the mind of designers, little attention has been given to providing robust mountings for cantilever arms which are both simple in nature and therefore lend themselves to easy on-site assembly, and which also can be readily mounted in, or adjusted to different positions on the supports as required by the customer.

The present invention has been directed to providing a solution to this problem of providing a cantilever arm assembly which is sufficiently robust to meet load requirements, and yet which is simple in design and can be readily mounted at any one of a number of possible positions along the length of the support.

According to the invention, there is provided a cantilever type racking system which comprises upright supports, generally horizontal beams interconnecting the upright supports, and generally horizontal cantilever arms each adjustably mounted at a selected one of a plurality of mounting positions provided on each support, each arm extending outwardly of its mounting on the respective support so as to form, or to carry storage racking thereon, in which:

the mounting of at least one cantilever arm on a respective support comprises a shoe mounted rigidly on an inner end of the arm;

holes are formed in the shoe which are in alignment with mounting holes formed in the support at the selected mounting position;

a pivot member is taken through the holes in the shoe and at the mounting position, and are arranged to pivotally mount the arm on the support and to bear shear loads transmitted from the arm to the support; and

a first bearing surface is provided on the support below the mounting holes and a second bearing surface is provided on the shoe below the pivot member and is engageable with the first bearing surface in order to transmit, from the arm to the support, bending moments generated by applied loads on the arm.

A racking system according to the invention provides a simple and yet robust mounting of a cantilever arm on a respective support, and in a way which can readily be carried out on-site with only a small expenditure of time.

Preferably, a plurality of cantilever arms will be mounted at selected mounting positions on respective supports by means of a mounting as defined above.

For particularly heavy duty applications, it is preferred that the or each shoe takes the form of a metal forging which is welded to the inner end of the cantilever arm.

Preferably, each upright support comprises a rectangular box section, which is a standard profile of simple construction and readily available at reasonable cost. The shoe then takes the form of a U-shaped saddle having limbs which embrace the box section of the upright.

The pivot member preferably takes the form of a pivot pin which is of a sufficient diameter to withstand the shear forces applied by the cantilever arm to the support and via the pivot pin, the applied bending moments being resisted by the interengagement between the bearing surface of the shoe and the counter-bearing surface provided on the support. For medium or relatively light-weight rack loadings, it may not be necessary to have as strong a shoe as is provided by a forging, in which case a cantilever arm may be fabricated from welded plate in a U-shaped cross-section, with a shoe formation provided at the inner end of the arm by means of a channel section rigidly attached to, or formed integrally with the remainder of the arm.

In order to enable the angle of inclination of the arm to be varied, so that it can extend gently upwardly from its mounting on the support, adjustment means may be provided on the mounting to enable the arm to be adjusted upwardly about its pivot member. This feature may be useful when heavy loads, capable of rolling, are to be borne by the racking, such as steel bars or tubes, or carpet rolls, where it is important to prevent any risk of the load falling off the racking, so that the arm can be adjusted slightly above the horizontal so that the loads will tend, if at all, to roll towards the supports.

Preferred embodiments of racking system according to the invention will now be described in detail, by way of example only, with reference to the accompanying drawings, in which:

Figure 1 is an exploded view of an upright support column and a cantilever arm assembly, for use in a cantilever racking system according to the invention;

Figures 2a and 2b show, respectively, a horizontally extending cantilever arm, and an upwardly adjustable cantilever arm;

Figure 3 is an end view from the front of the cantilever arm;

Figure 4 is an end view from the back of the cantilever arm;

Figures 5 to 8 are, respectively, a plan view, a side view, an underside view, and an end view of a medium duty cantilever arm for use in a cantilever racking system according to the invention;

Figure 9 illustrates a non-adjustable medium duty cantilever arm, and an adjustable medium duty cantilever arm;

Figure 10 is a perspective illustration of a connecting piece for joining together two superposed upright supports or columns;

Figure 11 is a diagramatic and perspective illustration of part of a cantilever racking system according to the invention; and,

Figures 12a and 12b are perspective illustrations of alternative base constructions for a support column.

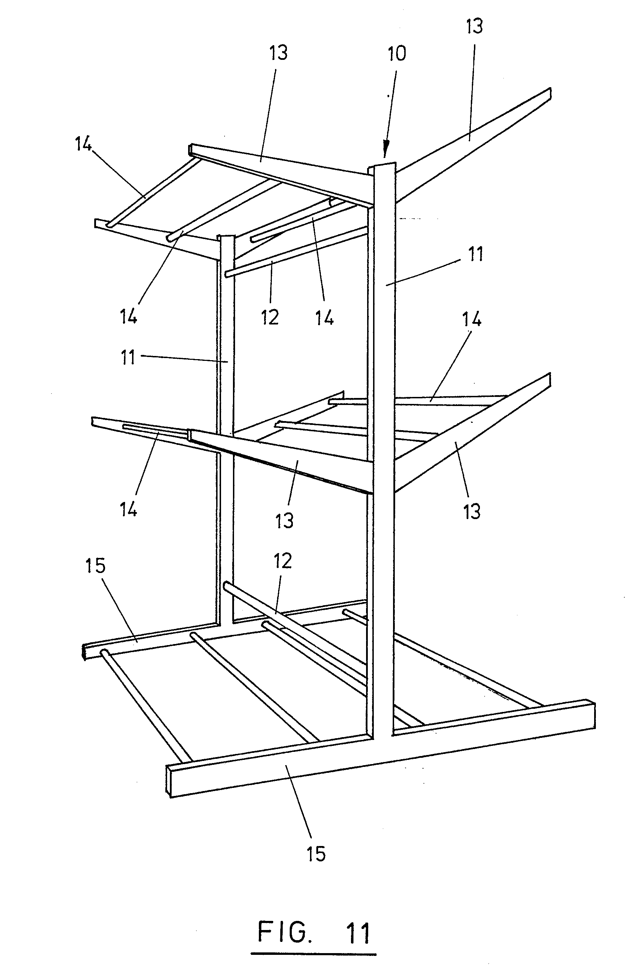

Referring first to Figure 11, this shows a cantilever racking system which is designated generally by reference 10 and which comprises a plurality of upright columns or supports 11, generally horizontal beams 12 interconnecting the upright supports 11, and generally horizontal cantilever arms 13 mounted on the supports 11 and extending outwardly therefrom so as to form, or to bear storage racking. In the illustrated diagramatic embodiments, storage racking is formed by means of support bars 14 which interconnect, at the same level, cantilever arms 13 of adjacent supports 11.

Each upright support 11 is rigidly secured e.g. by welding to a horizontal support bar 15 which may be secured (by means not shown) by suitable fasteners into a floor slab on which the racking system is provided.

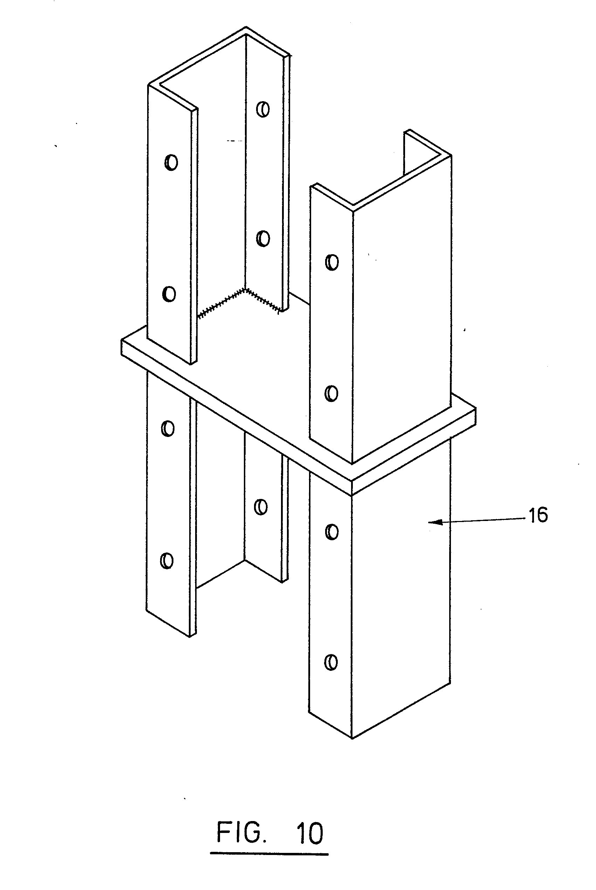

If it is desired to be able to extend the height of one of the supports 11, a connecting piece may be used, such as shown by reference numeral 16 in Figure 10. It will be evident from Figure 10 that the connecting piece 16 can readily receive and hold captive adjacent ends of two support elements which are to be joined together.

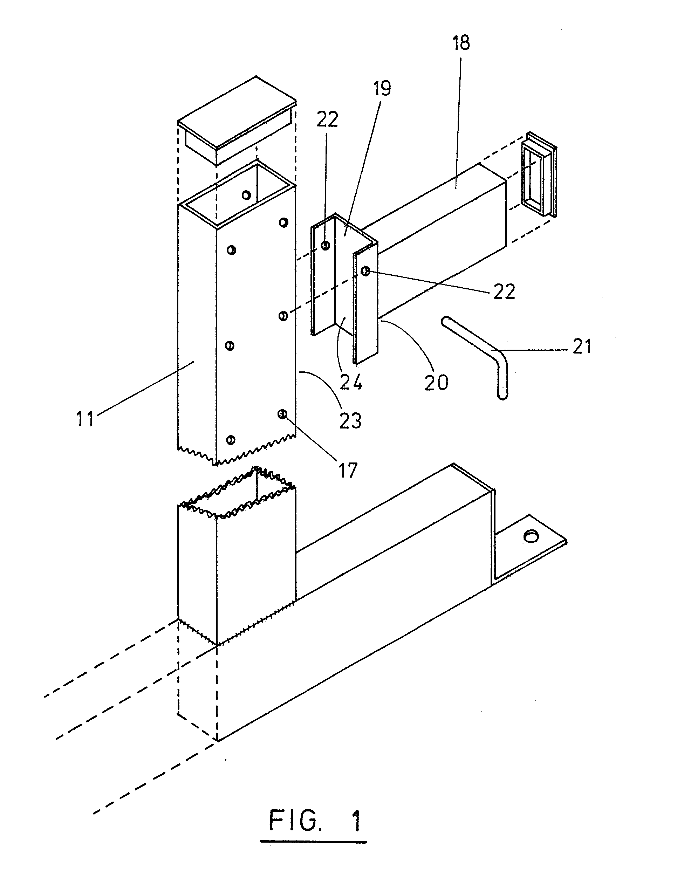

Referring now to Figure 1 of the drawings, this shows an exploded view of a typical upright support 11 which may be used in the racking system. The support 11 is provided with a plurality of mounting positions taken through the generally box section profile of the support 11. Cantilever arm 18 shown in Figure 1 can be mounted readily at any selected one of the mounting positions provided by the mounting holes 17, and the mounting is provided by means of a shoe 19 which is mounted rigidly at the inner end 20 of the arm 18. Holes 22 are formed in the shoe 19 and these are aligned with the selected mounting holes 17, and then a pivot member in the form of pivot pin 21 is taken through the holes 22 and through the mounting holes 17 in order to pivotally mount the arm 18 on the support 11 and to bear shear loads transmitted from the arm to the support.

A first bearing surface 23 is provided on the support below each pair of mounting holes 17, and a second bearing surface 24 is provided on the shoe below the pivot pin 21 and the holes 22, the second bearing surface 24 being engageable with the first bearing surface 23 in order to transmit from the arm 18 to the support 11, bending moments which are generated by applied loads on the arm. The construction of the box-section support 11, and of the shoe 19, will be such that strong bearing surfaces 23 and 24 are provided, to withstand the applied loads.

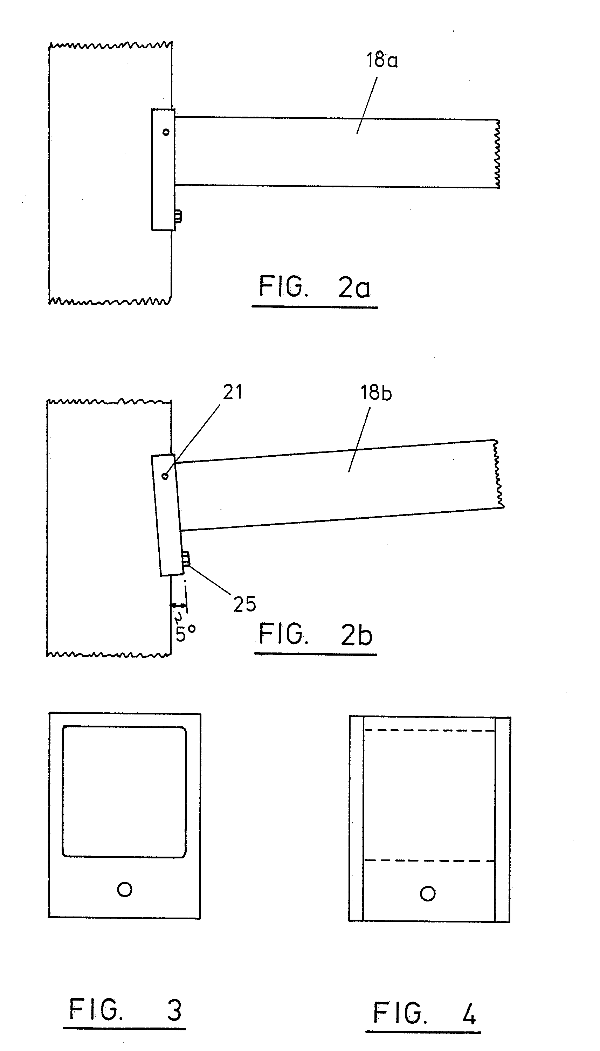

The cantilever arm assembly shown in Figure 1, and also in Figures 2 to 4, is a heavy duty arm, in which the shoe 19 is of particularly robust formation, being formed as a metal forging which is welded to the inner end 20 of the arm. Given that the support 11 is a box-section profile, the shoe 19 takes the form of a U-shaped saddle having limbs which embrace the support 11.

Figure 2a shows a cantilever arm 18a which is non-adjustable, and can only take up a substantially horizontal position, as shown. Figure 2b shows a cantilever arm 18b which can be upwardly adjusted about its pivot pin 21 to a limited extent, by adjustment of a threaded adjuster 25.

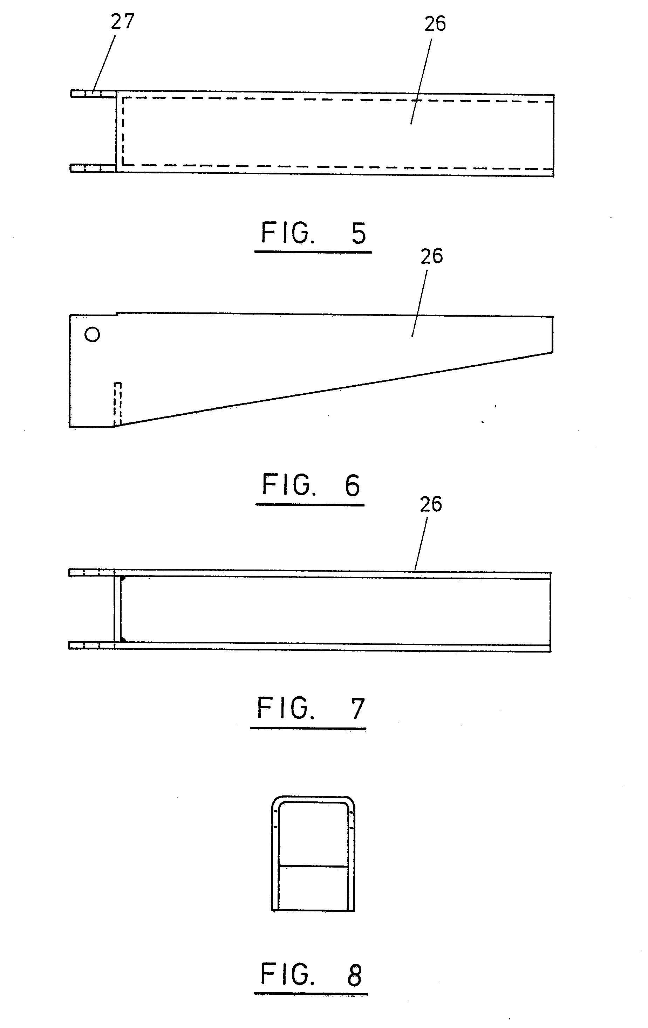

Referring now to Figures 5 to 8, this shows a medium duty cantilever arm arrangement, which is designated generally by reference 26. The arrangement 26 has a cantilever arm formed as a fabrication of welded plates in a U-shaped cross-section, with a shoe 27 being provided at the inner end of the arm by means of a channel section rigidly attached to, or formed integrally with the remainder of the arm.

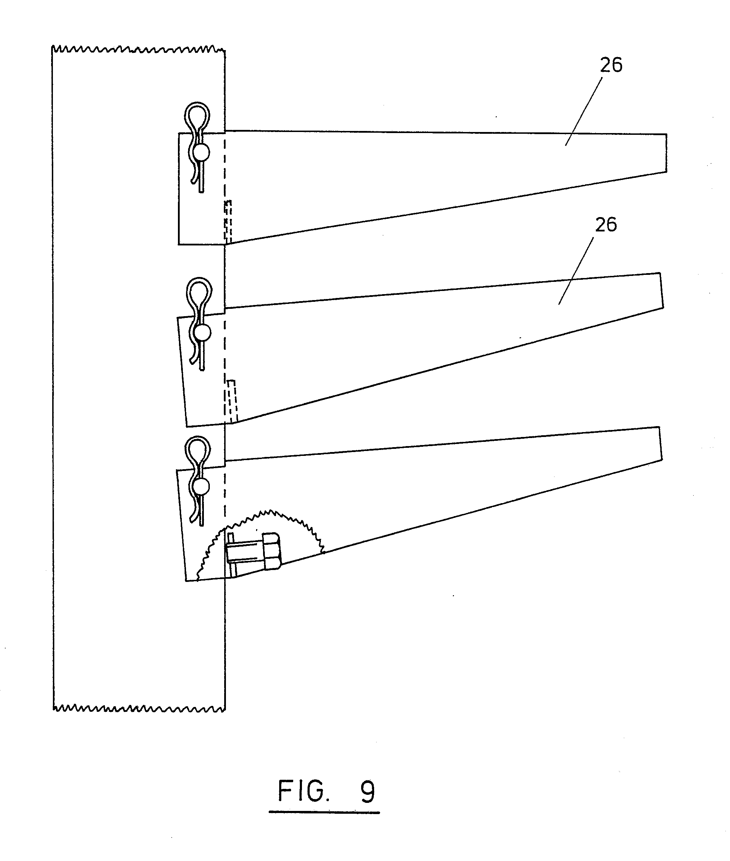

Figure 9 shows a non-adjustable medium duty cantilever arm, as well as an upwardly adjustable embodiment, similar to that shown in Figure 2b.

The upwardly adjustable embodiments are useful, when heavy loads, capable of rolling, are to be borne by the racking, when it is important to prevent any risk of the load falling off the racking.

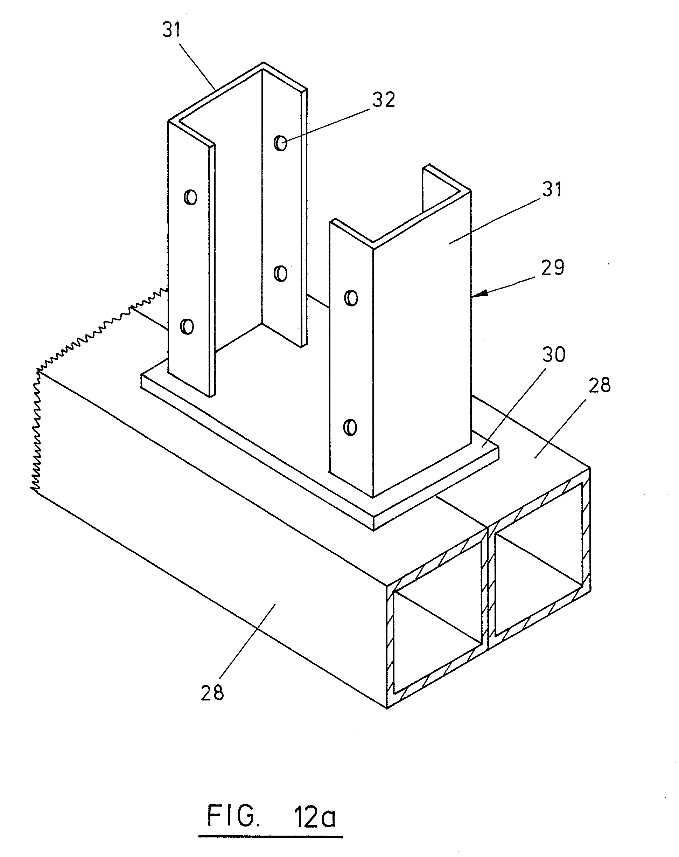

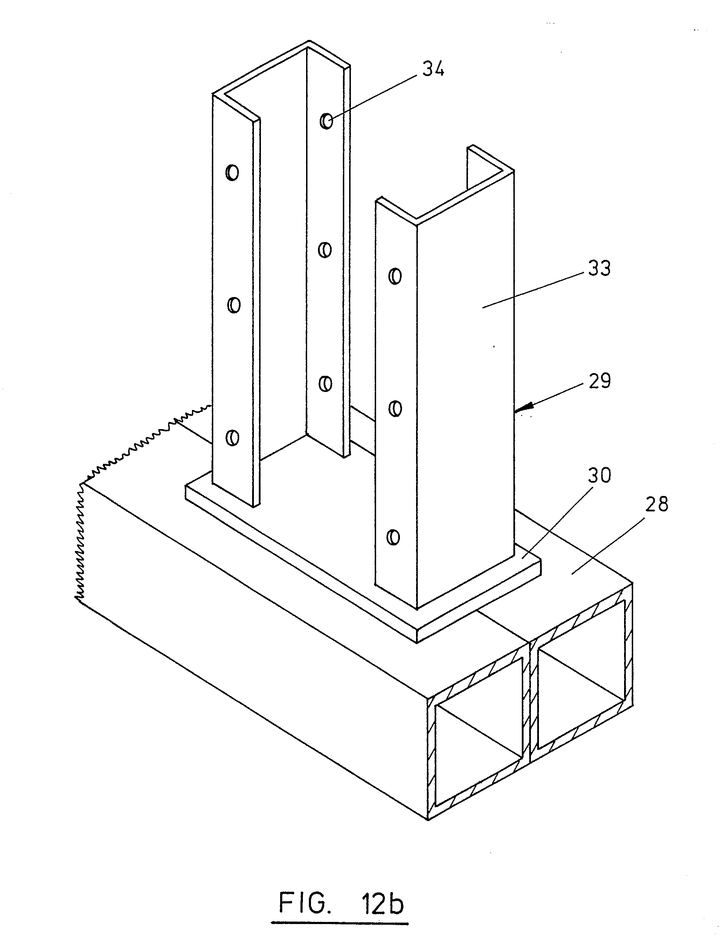

Referring to Figures 12a and 12b, these are perspective illustrations of alternative base constructions for one of the support columns of the cantilever racking system according to the invention. In Figure 12a horizontal box-section tubes 28 form the base proper, and a socket 29 is welded to the tubes 28 via a support plate 30. The sockets 29 is formed by a pair of opposed channels 31 into which the lower end of a column can be detachably received, and secured in position by bolts taken through holes 32 in the flanges of the channels 31. Figure 12b shows a generally similar arrangement, but with longer channels 33 having three holes 34.

The provision of detachable bases for the columns will greatly facilitate storage and transport of the component parts of a cantilever racking system according to the invention. It will also enable standardisation of column lengths for pre-manufacturing for stock, and also will enable an existing racking system to be modified in the future, if required, in a simple manner.

Although not shown, to strengthen the column structure of the racking system, each column may be formed of two box-sections welded together back-to-back. This enables less material to be used than in a single box-section column of similar strength.

## Claims

1. A cantilever type racking system which comprises upright supports (11), generally horizontal beams (12) interconnecting the upright supports, and generally horizontal cantilever arms (13, 18) each adjustably mounted at a selected one of a plurality of mounting positions (17) provided on each support, each arm extending outwardly of its mounting on the respective support so as to form, or to carry storage racking thereon, in which:

the mounting of at least one cantilever arm (18) on a respective support (17) comprises a shoe (19) mounted rigidly on an inner end (20) of the arm;

holes (22) are formed in the shoe (19) which are in alignment with mounting holes (17) formed in the support (11) at the selected mounting position;

a pivot member (21) is taken through the holes (22) in the shoe and the holes (17) at the mounting position, and are arranged to pivotally mount the arm (18) on the support (11) and to bear shear loads transmitted from the arm to the support; and

a first bearing surface (23) is provided on the support (11) below the mounting holes (17) and a second bearing surface (24) is provided on the shoe (19) below the pivot member (21) and is engageable with the first bearing surface (23) in order to transmit, from the arm (18) to the support (11), bending moments generated by applied loads on the cantilever arm (18).

2. A racking system according to Claim 1, including a plurality of cantilever arms (18) mounted at selected mounting positions on respective supports (11) by means of respective mounting shoes (19).

3. A racking system according to Claim 1 or 2, in which the or each shoe (19) takes the form of a metal forging which is welded to the inner end (20) of the respective cantilever arm (18).

4. A racking system according to any one of Claims 1 to 3, in which each upright support (11) comprises a rectangular box section, and the or each shoe (19) takes the form of a U-shaped saddle having limbs which embrace the box section of the upright.

5. A racking system according to any one of Claims 1 to 4, in which said pivot member (21) takes the form of a pivot pin which is of a sufficient diameter to withstand the shear forces applied by the cantilever arm (18) to the support (11), the applied bending moment being resisted by the interengagement between the bearing surface (24) of the shoe (19) and the counter-bearing surface (23) provided on the support (11).

6. A racking system according to Claim 1 or 2, in which at least one cantilever arm (26) is fabricated from welded plate in a U-shaped cross-section, with a shoe formation (27) provided at the inner end of the arm (26) by means of a channel section rigidly attached to, or formed integrally with the remainder of the arm.

7. A racking system according to any one of Claims 1 to 6, including adjustment means (25) provided on the shoe of the cantilever arm (18b) to enable the arm to be adjusted upwardly about its pivot member (21).

8. A racking system according to any one of Claims 1 to 7, including a joining piece (29) which forms a base for detachably receiving one of said support columns (11).

0269425

FIG. 1

0269425

18a

FIG. 2a

21

18b

25

5°

FIG. 2b

FIG. 3

FIG. 4

0269425

27    26

FIG.  5

26

FIG.  6

26

FIG.  7

FIG.  8

0269425

FIG. 9

0269425

16

FIG. 10

0269425

FIG. 11

0269425

FIG. 12a

0269425

FIG. 12b

| | DOCUMENTS CONSIDERED TO BE RELEVANT | | EP 87310383.2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | US - A - 3 512 654 (OLSEN et al.) | 1-6 | B 65 G 1/02 |
| Y | * Column 1, lines 39-45; column 3, lines 42-64; fig. 1,6,7 * | 7 | A 47 B 57/52 |
| Y | US - A - 3 114 531 (WEBER) <br> * Column 2, lines 26-30; fig. 6 * | 7 | |
| X | DE - A - 1 941 854 (BEAMLOCK CORP. LTD.) | 1-3, 5,6 | |
| A | * Page 4, line 11 - page 5, line 1; page 5, lines 6-19; fig. 1,3,4 * | 4 | |
| | | | TECHNICAL FIELDS SEARCHED (Int. Cl.4) |
| | | | A 47 B 57/00 |
| | | | A 47 F 1/00 |
| | | | A 47 F 5/00 |
| | | | B 65 G 1/00 |

The present search report has been drawn up for all claims

| Place of search | Date of completion of the search | Examiner |
|---|---|---|
| VIENNA | 28-01-1988 | PISSENBERGER |